# EUROPEAN PATENT SPECIFICATION

(11) **EP 3 214 861 B1**
(45) Date of publication and mention of the grant of the patent: **31.07.2019**
(21) Application number: 15856072.2
(22) Date of filing: 17.06.2015
(51) Int. Cl.: H04W 12/12, H04M 15/00

(54) **METHOD, DEVICE AND SYSTEM FOR DETECTING FRAUDULENT USER**
VERFAHREN, VORRICHTUNG UND SYSTEM ZUR DETEKTION EINES ERKENNUNG EINES BETRÜGERISCHEN BENUTZERS
PROCÉDÉ, DISPOSITIF ET SYSTÈME DE DÉTECTION D'UTILISATEUR FRAUDULEUX

(30) Priority: 29.10.2014 CN 201410591870
(43) Date of publication of application: 06.09.2017
(73) Proprietor: ZTE Corporation, Shenzhen, Guangdong 518057 (CN)
(72) Inventor: XIE, Liansheng, Shenzhen Guangdong 518057 (CN)
(74) Representative: Studio Torta S.p.A.
(86) International application number: PCT/CN2015/081683
(87) International publication number: WO 2016/065908

(56) References cited:
- EP-A1- 0 890 256
- CN-A- 101 137 085
- CN-A- 101 572 890
- CN-A- 101 730 091
- CN-A- 102 572 746
- CN-A- 103 412 940
- KR-B1- 101 033 870
- US-A1- 2003 063 725
- US-A1- 2014 004 892
- US-B1- 6 188 753

## Description

### TECHNICAL FIELD

The present disclosure generally relates to the technical field of communication, and more particularly, to a method, device and system for detecting a fraudulent user.

### BACKGROUND

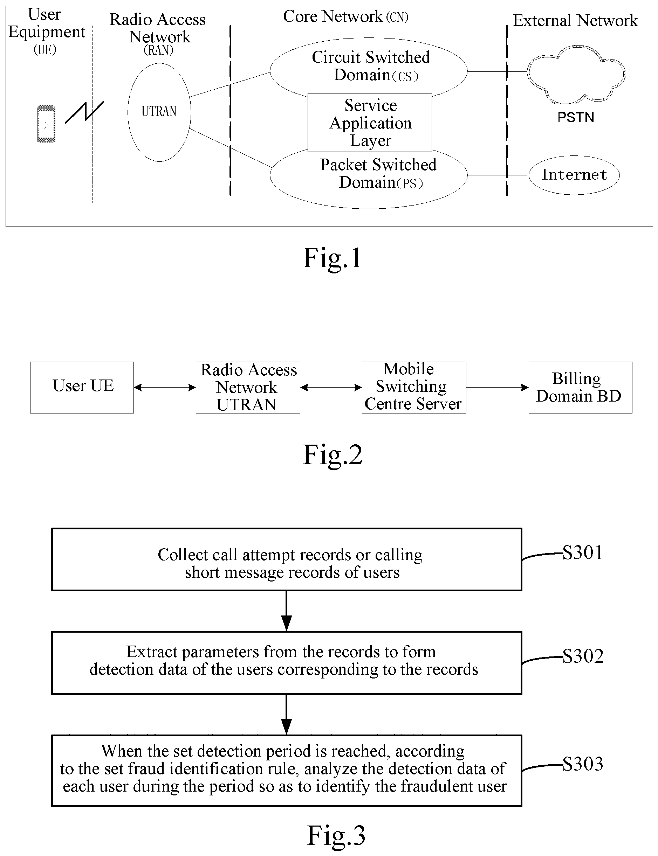

The third generation mobile communication system described by 3GPP usually includes a user terminal (User Equipment, referred to as UE), a wireless access network (Universal Mobile Telecommunications System (UMTS) terrestrial Radio Access Network, referred to as UTRAN), and a core network (referred to as CN), as shown in Fig. 1. The UTRAN is divided into two parts, i.e., a base station (Node B) and a radio network controller (referred to as RNC), to achieve wireless access and radio resource management. The core network is divided into two parts, i.e., a Circuit Switched Domain (referred to as CS domain) and a Packet Switched Domain (referred to as PS), and is responsible for connections with other external networks and communication management of UEs. The circuit switched domain mainly includes network entities such as a Mobile Switching Centre server (MSC server), a Media GateWay (MGW), a Visitor Location Register (VLR), and a Home Location Register (HLR), and the packet switched domain mainly includes network entities such as a Serving GPRS Support Node (SGSN), and a Gateway GPRS Support Node (GGSN).

Mobile communication networks have two basic service functions: mobile voice services and short message services (SMSs). The mobile voice services refer to a mobile call service and a voice message service. The mobile call service is the most important service. The short message service is one of the earliest message services, and has now become the message service of the highest penetration rate, through which mobile phones may send and receive short messages between each other. The contents of short messages mainly include texts, digital or binary non-text data. The SMSs have been well accepted by people because they are simple and easy to use. Fig. 2 is a diagram showing a basic flow for a user to initiate a voice service or a SMS. Specifically, a UE accesses a UTRAN through an air interface (i.e., a wireless mode), the UTRAN accesses a network entity (i.e., a MSC Server) in the CS domain in the core network, the MSC Server controls the call connection and provides billing information, and meanwhile formats the billing information into call detailed record (CDR) files, and transmits the CDR files via a Bc interface to a billing domain (BD) which completes the final billing for the users.

The voice call service or SMS services may be used by some bad users, whom are called as fraudulent users (fraudsters) in this field. These users send fraud short messages using a group message sender (a tool for sending short messages in group), or make group calls to harass users across a whole number segment provided by operators, to induce the users to call back, and to leave fraud messages to the users. When the fraudulent users initiate a group call, they usually set a particular number segment, and then dial continuously from 0000 to 9999. After the phones of the called users ring for one to three seconds, the fraudulent users release the call, and no response time is given to the called users. Meanwhile, no call detailed record (record) will be generated in the MSC server, thereby avoiding charges.

These fraudulent users generally purchase low-cost phone cards from different parts of the country in large quantity, and after getting the phone cards, they send insanely thousands of short messages using the group message sender, and then they will not use the cards after the cards have overdue bills. Once the fraudulent users find that the phone numbers are restricted, for example, calling of long-distance numbers are not allowed any more, they will replace these cards with new ones. Thus, the timeliness requirement for monitoring calling behaviors of these users is relatively high.

The fraudulent users cause negative influences to network security and service income of operators. The fraudulent users occupy a large number of wireless resources, which reduces call completing rate index of normal users, and causes switch failures and influences system stability when a large traffic occurs.

The above section provides background information related to the present disclosure which is not necessarily prior art.

Patent document US61887531 discloses a method and apparatus for detection and prevention of calling card fraud.

### SUMMARY

The present disclosure provides a method, device and system for detecting a fraudulent user to effectively identify the fraudulent user, as defined in the appended claims.

In particular, an embodiment of a method for detecting a fraudulent user, includes:
analyzing data extracted from a call attempt record (call attempt CDR, call attempt call detailed record) or a calling short message record (calling short message CDR, calling short message call detailed record) of a user within a detection period according to a set fraud identification rule so as to identify a fraudulent user.

According to an exemplary embodiment, in the method, the analyzing data extracted from the call attempt record or the calling short message record of the user within the detection period according to the set fraud identification rule so as to identify the fraudulent user includes:
collecting the call attempt record or the calling short message record of the user;
extracting a parameter from the record to form detection data of the user corresponding to the record; and
when the set detection period is reached, according to the set fraud identification rule, analyzing the detection data of each user during the period so as to identify the fraudulent user.

According to an exemplary embodiment, the method further includes: after the fraudulent user is identified, setting a service restriction policy corresponding to the fraudulent user to restrict service usage of the fraudulent user.

According to an exemplary embodiment, in the method:
the service restriction policy includes one or more of the following restriction conditions:
preventing the fraudulent user from calling, false billing the fraudulent user, restricting a short message service of the user and preventing the fraudulent user from updating a location.

The parameter extracted from the call attempt record includes extracting one or more the following parameters: a caller number, a callee number, a caller cell, a caller location area, and a reason for call release.

The parameter extracted from the calling short message record includes extracting one or more the following parameters: a short message sender number, a short message receiver number, a short message sender cell, and a short message sender location areas.

The set fraud identification rule includes a voice fraud identification rule and a short message fraud identification.

The voice fraud identification rule includes one or more of the following determination rules: whether the number of call attempts during the detection period exceeds a set threshold, whether the callee numbers belong to the same number segment, whether the reasons for call release are early release of ring, and whether the caller cells and the caller location areas are the same.

The short message fraud identification rule includes one or more of the following determination conditions: whether the number of short messages sent during the detection period exceeds a set threshold, whether the short message receiver numbers belong to the same number segment, and whether the short message sender cells and the short message sender location areas are the same.

There is provided a fraud detection device, including:
a fraudulent user identification module configured to analyze data extracted from a call attempt record or a calling short message record of a user within a detection period according to a set fraud identification rule so as to identify a fraudulent user.

According to an exemplary embodiment, in the device, the fraudulent user identification module includes:
a data collection sub-module configured to collect the call attempt record or the calling short message record of the user;
a data process sub-module configured to extract a parameter from the record to form detection data of the user corresponding to the record; and
a fraud detection sub-module configured to, when the set detection period is reached, according to the set fraud identification rule, analyzing the detection data of each user during the period so as to identify the fraudulent user.

According to an exemplary embodiment, in the device, the fraudulent user identification module is further configured to: after the fraudulent user is identified, set a service restriction policy corresponding to the fraudulent user to restrict service usage of the fraudulent user.

There is provided a system for detecting a fraudulent user, including a Mobile Switching Center (MSC) server and the fraud detection device as described above;
the MSC server is configured to generate the call attempt record and the calling short message record for the user and send the call attempt record and the calling short message record to the fraud detection device.

According to an exemplary embodiment, the fraud detection device is further configured to send a fraudulent user number and a service restriction policy set for the fraudulent user to the MSC server; and
the MSC server is further configured to add the fraudulent user number into a black list, and restrict service usage of the fraudulent user according to the service restriction policy corresponding to the fraudulent user.

There is provided a computer readable storage medium, in which computer executable instructions are stored, wherein the computer executable instructions are configured to perform any one of the methods as described above.

In the embodiments of the present disclosure, fraud activities are detected based on the call attempt record and the calling short message record, and thus the fraudulent user (fraudster) can be detected efficiently and timely. In addition, the service restriction policy can be set for the fraudulent user to restrict service usage of the fraudulent user, thereby reducing loss of operators.

This section provides a summary of various implementations or examples of the technology described in the disclosure, and is not a comprehensive disclosure of the full scope or all features of the disclosed technology.

### BRIEF DESCRIPTION OF THE DRAWINGS

Fig. 1 is a schematic diagram showing a mobile communication system network described in 3 GPP.
Fig. 2 is a schematic diagram showing a flow for a user to initiate a voice call or use a short message service in a mobile network according to related arts.
Fig. 3 is a flow chart showing a method for detecting a fraudulent user according to an embodiment of the present disclosure.
Fig. 4 is a schematic diagram showing a flow for a user to initiate a voice call or use a short message service in a mobile network according to an embodiment of the present disclosure.
Fig. 5 is a flow chart for identifying a fraudulent user according to a voice fraud identification rule according to an embodiment of the present disclosure.
Fig. 6 is a flow chart for identifying a fraudulent user according to a short message fraud identification rule according to an embodiment of the present disclosure.
Fig. 7 is a block diagram showing a structure of a fraud detection device according to an embodiment of the present disclosure.
Fig. 8 is a block diagram showing a system for detecting a fraudulent user according to an embodiment of the present disclosure.

### DETAILED DESCRIPTION

In order to improve the efficiency for detecting a fraudulent user, embodiments of the present disclosure provide a method, device and system for detecting a fraudulent user. The technical solutions in the embodiments of the present disclosure will be described below with reference to drawings in the embodiments of the present disclosure.

### First Embodiment

The embodiment of the present disclosure provides a method for detecting a fraudulent user. Specifically, the method realizes the detection of the fraudulent user by using the following mode: analyzing data extracted from a call attempt record or a calling short message record of a user within a detection period according to a set fraud identification rule so as to identify a fraudulent user.

The call attempt record refers to a record generated in a case where the ring duration of a call is shorter than a preset value and no phone state (connected state) is entered.

Fig. 3 shows the specific implementations of the method. The method includes the following steps.

In step S301, a call attempt record or a calling short message record of a user is collected.

In step S302, a parameter is extracted from the record to form detection data of the user corresponding to the record.

In step S303, when the set detection period is reached, according to the set fraud identification rule, the detection data of each user during the period is analyzed so as to identify the fraudulent user.

As an example, in the embodiment, after the fraudulent user is identified, a service restriction policy corresponding to the fraudulent user is set to restrict service usage of the fraudulent user.

The service restriction policy includes, but is not limited to the following restriction conditions: preventing the fraudulent user from calling, false billing the fraudulent user, restricting short message services of the fraudulent user and preventing the fraudulent user from updating a location.

The false billing refers to billing from the time when the phone of the called user rings.

In view of the above, in the embodiment, fraud activities are detected based on the call attempt record and the calling short message record, and thus the fraudulent user (fraudster) can be detected efficiently and timely. In addition, the service restriction policy can be set for the fraudulent user to restrict service usage of the fraudulent user, thereby reducing loss of operators.

An embodiment of the present disclosure is described below. From the description of the embodiment, the detailed implementations of the method provided by the present disclosure will become apparent.

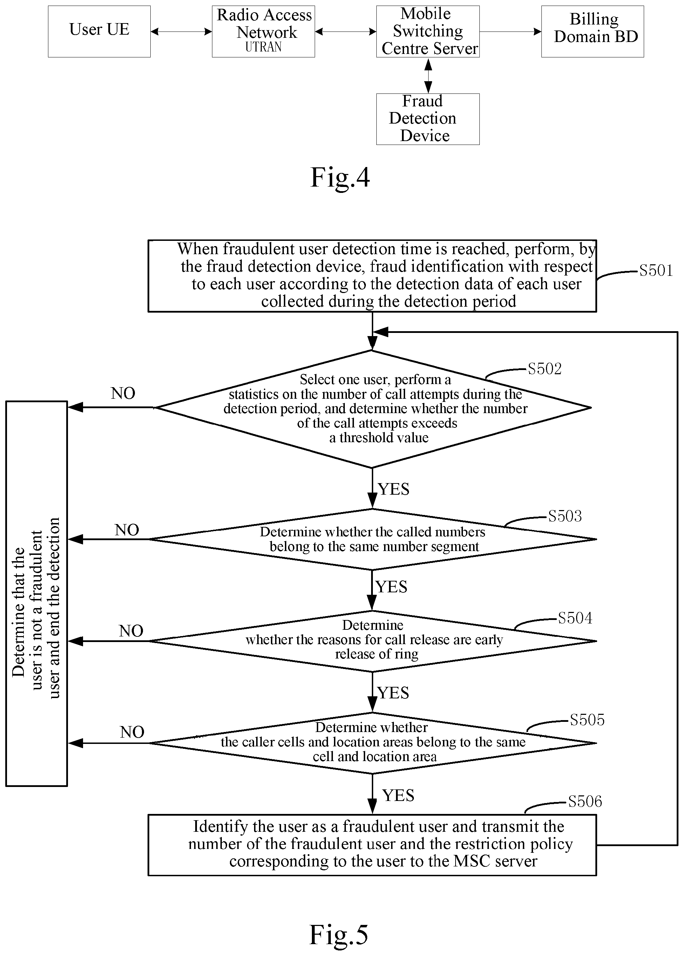

The embodiment of the present disclosure provides a method for detecting a fraudulent user. In the method, a function for outputting the call attempt record is added in a MSC server; and a fraud detection device is added in an existing network, as shown in Fig. 4. The fraud detection device analyzes the call attempt record and the calling short message record output from the MSC server, and identifies a fraudulent user according to features of the records and a fraudulent user identification rule; the fraud detection device transmits the number of the fraud user and the restriction policy for the user to the MSC server to form a black list, and the MSC server restricts service usage of the fraudulent user.

The flow for detecting a fraudulent user provided by an embodiment of the present disclosure may include the following process steps.

In step S1, a user (UE) initiates a voice call or uses a short message service request, and the UTRAN allocates a wireless channel.

In step S2, for the voice call, the MSC server completes a call connection, a resource allocation, a route selection, an authentication and an encryption and the like for the user, and the UE establishes a signaling channel with the network. For the short message calling, the MSC server submits the short message to a corresponding short message center. Meanwhile, the MSC server formats the billing information to form CDR files; and the formed CDR files include a call attempt CDR (call detailed record) (abbreviated to as call attempt record), a calling short message CDR (abbreviated to as calling short message record) and the like depending on service usage conditions of the user.

In step S3, the fraud detection device collects the call attempt CDR and the calling short message CDR files output from the MSC server.

In step S4, the fraud detection device parses the call attempt CDR and the calling short message CDR files, extracts from the call attempt CDR information such as a caller number, a callee number, a caller location area, a caller cell, and a reason for call release, and extracts from the calling short message CDR information such as a short message sender number, a short message receiver number, a short message sender location area, and a short message sender cell to form detection data, and identify a fraudulent user periodically (the period may be set flexibly, for example, every five minutes) according to a fraudulent user identification rule.

The parameter needs to be detected for the voice fraud identification includes, but is not limited to: the number of call attempts during the detection period, the callee number, the reason for call release, the caller cell and location area, the total number of call attempts in 24 hours (the detection is performed by this rule independently, and a statistics is performed on the total number of call attempts in each day; if the total number of call attempts in each day exceeds a preset threshold value, it is determined that the user making the call attempts is a fraudulent user).

The parameter needs to be detected for the short message fraud identification rule includes, but is not limited to: the number of short messages sent during the detection period, a short message receiver number, a short message sender cell and location area, and a total number of short messages sent in 24 hours (the detection is performed by this rule independently, and a statistics is performed on the total number of times for sending short messages in each day; if the total number of times for sending short messages in each day exceeds a preset threshold value, it is determined that the user sending these short messages is a fraudulent user).

In step S5, the fraud detection device sets a service restriction policy for the fraudulent user and transmits a phone number of the fraudulent user and the service restriction policy thereof to the MSC server to form a black list.

The restriction policy includes, but is not limited to: preventing the fraudulent user from calling (the passing ratio may be configured, i.e., the ratio of allowable successful calls may be configured), fault billing the fraudulent user (i.e., starting billing from the time when the phone of the called user rings, and the ratio may be configured), restricting a short message service of the fraudulent user and preventing the fraudulent user from updating a location.

In step S6, the fraudulent user initiates a subsequent call or a short message service request.

In step S7, according to the black list, the MSC server identifies the current user as a fraudulent user, and restricts service usage of this user according to the service restriction policy corresponding to the fraudulent user, so that the call initiated by the user fails or sending short message fails.

Using the method provided by the embodiments of the present disclosure, a fraudulent user can be identified in one detection period after the user uses the fraud service, and the subsequent service usage will be restricted.

In the embodiments of the present disclosure, the fraudulent user is identified according to a fraud identification rule. The specific identification manner may be as follows. 1. The fraudulent user is identified or determined according to a voice fraud identification rule. As shown in Fig. 5, the following steps are included.

In step S501, when fraudulent user detection time is reached (for example, the detection is performed every five minutes), the fraud detection device performs fraud identification with respect to each user one by one according to the detection data of each user collected during the detection period.

In step S502, one user is selected, and a first match and identification rule is applied, in which the number of call attempts during the detection period is calculated, and it is determined whether the number of the call attempts exceeds a threshold value; if the number of the call attempts does not exceed the threshold value, it may be determined that the user is not a fraudulent user, and the detection is ended; and if the number of the call attempts exceeds the threshold value, step S503 is performed.

In step S503, for this user, a second match and identification rule is applied, in which it is determined whether the called numbers belong to the same number segment; if the called numbers do not belong to the same number segment, it may be determined that the user is not a fraudulent user, and the detection is ended; and if the called numbers belong to the same number segment, step S504 is performed.

In step S504, for this user, a third match and identification rule is applied, in which it is determined whether the reasons for call release are all early release of ring; if not all the reasons for the call release are early release of ring, it may be determined that the user is not a fraudulent user, and the detection is ended; and if all the reasons for call release are all early release of ring, step S505 is performed.

In step S505, for this user, a fourth match and identification rule is applied, in which it is determined whether the caller cells and the location areas all belong to the same cell and location area; if the caller cells and the location areas do not belong to the same cell and location area, it may be determined that the user is not a fraudulent user and the detection is ended; and if the caller cells and the location areas belong to the same cell and location area, step S506 is performed.

In step S506, it is detected that the user is a fraudulent user and a phone number of the fraudulent user and the restriction policy corresponding to the user are transmitted to the MSC server, and then the process returns to step S502.

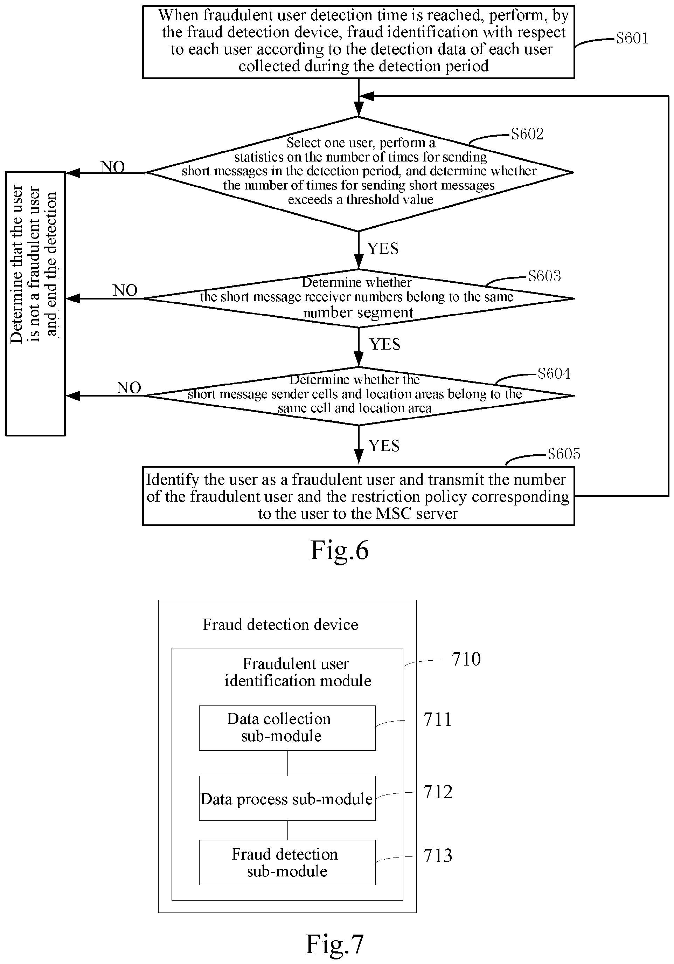

It should be noted that the match and identification rules listed above are only examples but not exhaustive, and addition or reduction of the match and identification rules is possible depending on different situations. 2. The fraudulent user is identified according to a short message fraud identification rule. As shown in Fig. 6, the following steps are included.

In step S601, when fraudulent user detection time is reached (for example, the detection is performed every five minutes), the fraud detection device performs fraud identification with respect to each user one by one according to the detection data of each user collected during the detection period.

In step S602, one user is selected, and a first match and identification rule is applied, in which the number of times for sending short messages in the detection period is calculated, and it is determined whether the number of times for sending short messages exceeds a threshold value; if the number of times for sending short messages does not exceed the threshold value, it may be determined that the user is not a fraudulent user, and the detection is ended; and if the number of times for sending short messages exceeds the threshold value, step S603 is performed.

In step S603, for this user, a second match and identification rule is applied, in which it is determined whether the short message receiver numbers belong to the same number segment; if the short message receiver numbers do not belong to the same number segment, it may be determined that the user is not a fraudulent user, and the detection is ended; and if the short message receiver numbers belong to the same number segment, step S604 is performed.

In step S604, for this user, a third match and identification rule is applied, in which it is determined whether the short message sender cells and location areas belong to the same cell and location area; if the short message sender cells do not belong to the same cell and location area, it may be determined that the user is not a fraudulent user, and the detection is ended; and if the short message sender cells belong to the same cell and location area, step S605 is performed.

In step S605, it is detected that this user is a fraudulent user and a phone number of the fraudulent user and a restriction policy corresponding to the user are transmitted to the MSC server, and then the process returns to step S602.

It should be noted that the match and identification rules listed above are only examples but not exhaustive, and addition or reduction of the match and identification rules is possible depending on different situations.

In view of the above, the methods provided by the embodiments of the present disclosure can find frauds timely and restrict illegal activities such as, sending fraud short messages using a group message sender or making group calling to harass users across a whole segment provided by operators, or leaving fraud messages to users. Thus, the methods can reduce the loss caused by the frauds, raise the profile of the operator and enhance customer satisfaction.

### Second embodiment

The embodiment of the present disclosure provides a fraud detection device which may be an independent third party device or a module integrated into a MSC server. In order to minimize the influence on the working efficiency of the MSC server, the fraud detection device in the embodiments of the present disclosure is an independent third party device. Under the situation where the fraud detection device is an independent third party device, communication interfaces are added into the fraud detection device and the MSC server, so that the fraud detection device may receive the call attempt records and calling short message records sent from the MSC server, and notify the MSC server of the detected fraudulent users, and the MSC server may restrict the call services or short message services of the fraudulent users.

As shown in Fig. 7, the fraud detection device in the embodiment includes a fraudulent user identification module 710.

The fraudulent user identification module 710 is configured to analyze data extracted from a call attempt record or a calling short message record of a user in a detection period according to a set fraud identification rule so as to identify a fraudulent user.

The fraudulent user identification module 710 includes a data collection sub-module 711, a data process sub-module 712, and a fraud detection sub-module 713.

The data collection sub-module 711 is configured to collect the call attempt record or the calling short message record.

The data process sub-module 712 is configured to extract a parameter from the record to form detection data of the user corresponding to the record.

The fraud detection sub-module 713 is configured to, when the set detection period is reached, according to the set fraud identification rule, analyze the detection data of each user during the period so as to identify the fraudulent user.

The fraudulent user identification module 710 is further configured to, after the fraudulent user is identified, set a service restriction policy corresponding to the fraudulent user to restrict service usage of the fraudulent user.

The service restriction policy includes, but is not limited to the following restriction conditions: preventing the fraudulent user from calling, fault billing the fraudulent user, restricting short message services of the fraudulent user and preventing the fraudulent user from updating locations.

In this embodiment, the parameters extracted by the data process sub-module 712 include one or more of the following parameters: caller numbers, callee numbers, caller cells, caller location areas, and reasons for call release. The parameters extracted from the calling short message records include one or more of the following parameters: short message sender numbers, short message receiver numbers, short message sender cells, and short message sender location areas.

In this embodiment, the set fraud identification rule includes a voice fraud identification rule and a short message fraud identification.

The voice fraud identification rule includes, but is not limited to the following determination rules: whether the number of call attempts corresponding to each user during the detection period exceeds a set threshold, whether the callee numbers corresponding to each user belong to the same number segment, whether the reasons for call release corresponding to each user are early release of ring, and whether the caller cells and the caller location areas corresponding to each user are the same.

The short message fraud identification rule includes, but is not limited to the following determination conditions: whether the number of short messages sent during the detection period exceeds a set threshold, whether the short message receiver numbers belong to the same number segment, and whether the short message sender cells and the short message sender location areas are the same.

In view of the above, in the embodiments of the present disclosure, fraud activities are detected based on the call attempt records and the calling short message records, and thus fraudulent users (fraudsters) can be detected efficiently and timely. In addition, service restriction policies can be set for these fraudulent users to restrict service usage of the fraudulent users, thereby reducing loss of operators.

### Third Embodiment

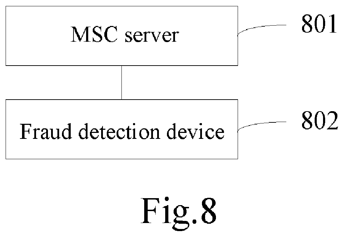

The embodiment of the present disclosure provides a system for detecting a fraudulent user. As shown in Fig. 8, the system includes a Mobile Switching Centre server (MSC server) 801 and the fraud detection device 802 as provided in the second embodiment.

The MSC server 801 is configured to generate call attempt records and calling short message records for users and send the call attempt records and the calling short message records to the fraud detection device 802.

The fraud detection device 802 is further configured to send a phone number of the fraudulent user and a service restriction policy set for the fraudulent user to the MSC server 801.

The MSC server 801 is further configured to add the phone number of the fraudulent user into a black list, and restrict service usage of the fraudulent user according to the service restriction policy corresponding to the fraudulent user.

In view of the above, the system provided by the embodiments of the present disclosure can find frauds timely and restrict illegal activities such as, sending fraud short messages using the group message sender or making group calling to harass users across a whole segment provided by operators, or leaving fraud messages to users. Thus, the methods can reduce the loss caused by the frauds, improve operator images and enhance customer satisfaction.

One of ordinary skill in this art will appreciate that all or a part of the steps in the above embodiments can be implemented by computer programs or flows, and the computer programs can be stored in a computer readable storage medium. When the computer programs are executed in a corresponding hardware platform (for example, a system, a device, an apparatus, or an equipment and the like), one or a combination of steps in the above methods can be implemented.

According to an exemplary embodiment, all or a part of steps of the above embodiment can be implemented by integrated circuits, and the these steps can be implemented using individual integrated circuit modules, or a plurality of modules or steps can be implemented using a single integrated circuit module.

The devices/functional modules/functional units in the above embodiments can be implemented using general purpose computing devices, which can be integrated into a single computing device or distributed over a network consisting of a plurality of computing devices.

When the devices/functional modules/functional units in the above embodiments are implemented as software functional modules and sold or used as individual products, the devices/functional modules/functional units can be stored in a computer readable storage medium, which can be a read only memory, a magnetic disk or an optical disk and the like.

## Claims

1. A method for detecting a fraudulent user, **characterized by** comprising the step of:
analyzing data extracted from a call attempt record or a calling short message record of a user within a detection period according to a set fraud identification rule so as to identify a fraudulent user, the call attempt record referring to a record generated in a case where a ring duration of a call is shorter than a preset value and no phone state is entered,
wherein the analyzing data extracted from the call attempt record or the calling short message record of the user within the detection period according to the set fraud identification rule so as to identify the fraudulent user comprises:
collecting (S301) the call attempt record or the calling short message record of the user;
extracting (S302) a parameter from the record to form detection data of the user corresponding to the record;
when the set detection period is reached, according to the set fraud identification rule, analyzing (S303) the detection data of each user during this period so as to identify the fraudulent user,
wherein the extracted parameter from the call attempt record comprises one or more of the following parameters: a caller number, a callee number, a caller cell, a caller location area, and a reason for call release;
wherein the extracted parameter from the calling short message record comprises one or more of the following parameters: a short message sender number, a short message receiver number, a short message sender cell, and a short message sender location area;
wherein the set fraud identification rule comprises a voice fraud identification rule and a short message fraud identification;
wherein the voice fraud identification rule comprises one or more of the following determination rules: whether the number of call attempts during the detection period exceeds a set threshold, whether the callee numbers belong to the same number segment, whether the reasons for call release are early release of ring, and whether the caller cells and the caller location areas are the same;
wherein the short message fraud identification rule comprises one or more of the following determination conditions: whether the number of short messages sent during the detection period exceeds a set threshold, whether the short message receiver numbers belong to the same number segment, and whether the short message sender cells and the short message sender location areas are the same; and
setting a service restriction policy corresponding to the fraudulent user to restrict service usage of the fraudulent user after the fraudulent user is identified.

2. The method according to claim 1, wherein the service restriction policy comprises one or more of the following restriction conditions: preventing the user from calling, false billing the fraudulent user, restricting a short message service of the user and preventing the user from updating a location.

3. A fraud detection device, **characterized by** comprising:
a fraudulent user identification module (710) configured to analyze data extracted from a call attempt record or a calling short message record of a user within a detection period according to a set fraud identification rule so as to identify a fraudulent user, the call attempt record referring to a record generated in a case where a ring duration of a call is shorter than a preset value and no phone state is entered,
wherein the fraudulent user identification module (710) comprises:
a data collection sub-module (711) configured to collect the call attempt record or the calling short message record of the user;
a data process sub-module (712) configured to extract a parameter from the record to form detection data of the user corresponding to the record; and
a fraud detection sub-module (713) configured to, when the set detection period is reached, according to the set fraud identification rule, analyze the detection data of each user during the period so as to identify the fraudulent user,
wherein the extracted parameter from the call attempt record comprises one or more of the following parameters: a caller number, a callee number, a caller cell, a caller location area, and a reason for call release;
wherein the extracted parameter from the calling short message record comprises one or more of the following parameters: a short message sender number, a short message receiver number, a short message sender cell, and a short message sender location area;
wherein the set fraud identification rule comprises a voice fraud identification rule and a short message fraud identification;
wherein the voice fraud identification rule comprises one or more of the following determination rules:
whether the number of call attempts during the detection period exceeds a set threshold, whether the callee numbers belong to the same number segment, whether the reasons for call release are early release of ring, and whether the caller cells and the caller location areas are the same;
wherein the short message fraud identification rule comprises one or more of the following determination conditions: whether the number of short messages sent during the detection period exceeds a set threshold, whether the short message receiver numbers belong to the same number segment, and whether the short message sender cells and the short message sender location areas are the same;
wherein the fraudulent user identification module (710) is further configured to set a service restriction policy corresponding to the fraudulent user to restrict service usage of the fraudulent user after the fraudulent user is identified.

4. A system for detecting a fraudulent user, comprising a Mobile Switching Center MSC server (801) and the fraud detection device according claim 3; wherein the MSC server (801) is configured to generate a call attempt record and a calling short message record for a user and send the call attempt record and the calling short message record to the fraud detection device.

5. The system according to claim 4, wherein the fraud detection device is further configured to send a phone number of the fraudulent user and a service restriction policy set for the fraudulent user to the MSC server; and
the MSC server (801) is further configured to add the phone number of the fraudulent user into a black list, and restrict service usage of the fraudulent user according to the service restriction policy corresponding to the fraudulent user.

6. A computer readable storage medium, in which computer executable instructions are stored, wherein the computer executable instructions are configured to perform the method according to claim 1 or 2.

7. A computer program, which when executing on a processor of a device, performs a method according to claim 1 or 2.

## Patentansprüche

1. Verfahren zum Erkennen eines betrügerischen Benutzers, **dadurch gekennzeichnet, dass** es den Schritt umfasst des:
Analysierens von aus einem Anrufversuchsverzeichnis oder einem Anruf-Kurznachrichtenverzeichnis eines Benutzers innerhalb eines Erkennungszeitraums extrahierten Daten gemäß einer eingestellten Betrugsidentifikationsregel, um einen betrügerischen Benutzer zu identifizieren, wobei sich das Anrufversuchsverzeichnis auf ein Verzeichnis bezieht, das generiert wird, falls eine Klingeldauer eines Anrufs kürzer ist als ein voreingestellter Wert und kein Telefonatszustand zustande kommt,
wobei das Analysieren von aus dem Anrufversuchsverzeichnis oder dem Anruf-Kurznachrichtenverzeichnis des Benutzers innerhalb des Erkennungszeitraums extrahierten Daten gemäß der eingestellten Betrugsidentifikationsregel, um den betrügerischen Benutzer zu identifizieren, umfasst:
Sammeln (S301) des Anrufversuchsverzeichnisses oder des Anruf-Kurznachrichtenverzeichnisses des Benutzers;
Extrahieren (S302) eines Parameters aus dem Verzeichnis, um Erkennungsdaten des Benutzers zu bilden, die dem Verzeichnis entsprechen;
wenn der eingestellte Erkennungszeitraum erreicht ist, Analysieren (S303), gemäß der eingestellten Betrugsidentifikationsregel, der Erkennungsdaten jedes Benutzers während dieses Zeitraums, um den betrügerischen Benutzer zu identifizieren;
wobei der extrahierte Parameter aus dem Anrufversuchsverzeichnis einen oder mehrere der folgenden Parameter umfasst: eine Anrufernummer, eine Anrufempfängernummer, eine Anruferzelle, einen Anruferstandortbereich, und einen Grund für Anrufbeendigung;
wobei der extrahierte Parameter aus dem Anruf-Kurznachrichtenverzeichnis einen oder mehrere der folgenden Parameter umfasst: eine Kurznachrichten-Sendernummer, eine Kurznachrichten-Empfängernummer, eine Kurznachrichten-Senderzelle, und einen Kurznachrichten-Senderstandortbereich;
wobei die eingestellte Betrugsidentifikationsregel eine Sprachbetrugs-Identifikationsregel und eine Kurznachrichtenbetrugs-Identifikation umfasst;
wobei die Sprachbetrugs-Identifikationsregel eine oder mehrere der folgenden Bestimmungsregeln umfasst: ob die Anzahl von Anrufversuchen während des Erkennungszeitraums eine eingestellte Schwelle übersteigt, ob die Anrufempfängernummern zu demselben Nummernsegment gehören, ob die Gründe für Anrufbeendigung frühe Beendigung des Klingelns sind, und ob die Anruferzellen und die Anruferstandortbereiche dieselben sind;
wobei die Kurznachrichtenbetrugs-Identifikationsregel eine oder mehrere der folgenden Bestimmungsbedingungen umfasst: ob die Anzahl von während des Erkennungszeitraums gesendeten Kurznachrichten eine eingestellte Schwelle übersteigt, ob die Kurznachrichten-Empfängernummern zu demselben Nummernsegment gehören, und ob die Kurznachrichten-Senderzellen und die Kurznachrichten-Senderstandortbereiche dieselben sind; und
Einstellen einer Diensteinschränkungsrichtlinie, die dem betrügerischen Benutzer entspricht, um Dienstnutzung des betrügerischen Benutzers einzuschränken, nachdem der betrügerische Benutzer identifiziert ist.

2. Verfahren nach Anspruch 1, wobei die Diensteinschränkungsrichtlinie eine oder mehrere der folgenden Einschränkungsbedingungen umfasst: Hindern des Benutzers daran, anzurufen, falsches Fakturieren des betrügerischen Benutzers, Einschränken eines Kurznachrichtendienstes des Benutzers und Hindern des Benutzers daran, einen Standort zu aktualisieren.

3. Betrugserkennungsvorrichtung, **dadurch gekennzeichnet, dass** sie umfasst:
ein Modul (710) zur Identifikation betrügerischer Benutzer, das dazu konfiguriert ist, aus einem Anrufversuchsverzeichnis oder einem Anruf-Kurznachrichtenverzeichnis eines Benutzers innerhalb eines Erkennungszeitraums extrahierte Daten gemäß einer eingestellten Betrugsidentifikationsregel zu analysieren, um einen betrügerischen Benutzer zu identifizieren, wobei sich das Anrufversuchsverzeichnis auf ein Verzeichnis bezieht, das generiert wird, falls eine Klingeldauer eines Anrufs kürzer ist als ein voreingestellter Wert und kein Telefonatszustand zustande kommt,
wobei das Modul (710) zur Identifikation betrügerischer Benutzer umfasst:
ein Datensammel-Submodul (711), das dazu konfiguriert ist, das Anrufversuchsverzeichnis oder das Anruf-Kurznachrichtenverzeichnis des Benutzers zu sammeln;
ein Datenverarbeitungs-Submodul (712), das dazu konfiguriert ist, einen Parameter aus dem Verzeichnis zu extrahieren, um Erkennungsdaten des Benutzers zu bilden, die dem Verzeichnis entsprechen; und
ein Betrugserkennungs-Submodul (713), das dazu konfiguriert ist, wenn der eingestellte Erkennungszeitraum erreicht ist, die Erkennungsdaten jedes Benutzers während des Zeitraums gemäß der eingestellten Betrugsidentifikationsregel zu analysieren, um den betrügerischen Benutzer zu identifizieren;
wobei der extrahierte Parameter aus dem Anrufversuchsverzeichnis einen oder mehrere der folgenden Parameter umfasst: eine Anrufernummer, eine Anrufempfängernummer, eine Anruferzelle, einen Anruferstandortbereich, und einen Grund für Anrufbeendigung;
wobei der extrahierte Parameter aus dem Anruf-Kurznachrichtenverzeichnis einen oder mehrere der folgenden Parameter umfasst: eine Kurznachrichten-Sendernummer, eine Kurznachrichten-Empfängernummer, eine Kurznachrichten-Senderzelle, und einen Kurznachrichten-Senderstandortbereich;
wobei die eingestellte Betrugsidentifikationsregel eine Sprachbetrugs-Identifikationsregel und eine Kurznachrichtenbetrugs-Identifikation umfasst;
wobei die Sprachbetrugs-Identifikationsregel eine oder mehrere der folgenden Bestimmungsregeln umfasst: ob die Anzahl von Anrufversuchen während des Erkennungszeitraums eine eingestellte Schwelle übersteigt, ob die Anrufempfängernummern zu demselben Nummernsegment gehören, ob die Gründe für Anrufbeendigung frühe Beendigung des Klingelns sind, und ob die Anruferzellen und die Anruferstandortbereiche dieselben sind;
wobei die Kurznachrichtenbetrugs-Identifikationsregel eine oder mehrere der folgenden Bestimmungsbedingungen umfasst: ob die Anzahl von während des Erkennungszeitraums gesendeten Kurznachrichten eine eingestellte Schwelle übersteigt, ob die Kurznachrichten-Empfängernummern zu demselben Nummernsegment gehören, und ob die Kurznachrichten-Senderzellen und die Kurznachrichten-Senderstandortbereiche dieselben sind; und
wobei das Modul (710) zur Identifikation betrügerischer Benutzer weiter dazu konfiguriert ist, eine Diensteinschränkungsrichtlinie einzustellen, die dem betrügerischen Benutzer entspricht, um Dienstnutzung des betrügerischen Benutzers einzuschränken, nachdem der betrügerische Benutzer identifiziert ist.

4. System zum Erkennen eines betrügerischen Benutzers, das einen Mobile Switching Center-, MSC, Server (801) und die Betrugserkennungsvorrichtung nach Anspruch 3 umfasst;
wobei der MSC-Server (801) dazu konfiguriert ist, ein Anrufversuchsverzeichnis und ein Anruf-Kurznachrichtenverzeichnis für einen Benutzer zu generieren und das Anrufversuchsverzeichnis und das Anruf-Kurznachrichtenverzeichnis an die Betrugserkennungsvorrichtung zu senden.

5. System nach Anspruch 4, wobei die Betrugserkennungsvorrichtung weiter dazu konfiguriert ist, eine Telefonnummer des betrügerischen Benutzers und eine für den betrügerischen Benutzer eingestellte Diensteinschränkungsrichtlinie an den MSC-Server zu senden; und
der MSC-Server (801) weiter dazu konfiguriert ist, die Telefonnummer des betrügerischen Benutzers zu einer Blacklist hinzuzufügen und Dienstnutzung des betrügerischen Benutzers gemäß der Diensteinschränkungsrichtlinie, die dem betrügerischen Benutzer entspricht, einzuschränken.

6. Computerlesbares Speichermedium, in dem computerausführbare Anweisungen gespeichert sind, wobei die computerausführbaren Anweisungen dazu konfiguriert sind, das Verfahren nach Anspruch 1 oder 2 durchzuführen.

7. Computerprogramm, das, wenn es auf einem Prozessor einer Vorrichtung ausgeführt wird, ein Verfahren nach Anspruch 1 oder 2 durchführt.

## Revendications

1. Procédé de détection d'un utilisateur frauduleux, **caractérisé en ce qu'**il comprend l'étape suivante :
analyse de données extraites d'un enregistrement de tentative d'appel ou d'un enregistrement de message court d'appel d'un utilisateur dans une période de détection selon une règle établie d'identification de fraude de manière à identifier un utilisateur frauduleux, l'enregistrement de tentative d'appel désignant un enregistrement généré dans un cas où une durée de sonnerie d'un appel est inférieure à une valeur préétablie et aucun état de téléphonie n'est déclenché,
dans lequel l'analyse des données extraites de l'enregistrement de tentative d'appel ou de l'enregistrement de message court d'appel de l'utilisateur dans une période de détection en fonction de la règle établie d'identification de fraude de manière à identifier un utilisateur frauduleux comprend :
la collecte (S301) de l'enregistrement de tentative d'appel ou de l'enregistrement de message court d'appel de l'utilisateur ;
l'extraction (S302) d'un paramètre à partir de l'enregistrement pour former des données de détection de l'utilisateur correspondant à l'enregistrement ;
lorsque la période de détection établie est atteinte, selon la règle établie d'identification de fraude, l'analyse (S303) des données de détection de chaque utilisateur pendant cette période de manière à identifier l'utilisateur frauduleux,
dans lequel le paramètre extrait de l'enregistrement de tentative d'appel comprend un ou plusieurs des paramètres suivants : un numéro d'appelant, un numéro d'appelé, une cellule d'appelant, une zone de localisation d'appelant, et un motif de coupure d'appel ;
dans lequel le paramètre extrait de l'enregistrement de message court d'appel comprend un ou plusieurs des paramètres suivants : un numéro d'expéditeur de message court, un numéro de destinataire de message court, une cellule d'expéditeur de message court, et une zone de localisation d'expéditeur de message court ;
dans lequel la règle établie d'identification de fraude comprend une règle d'identification de fraude vocale et une identification de fraude par message court ;
dans lequel la règle d'identification de fraude vocale comprend une ou plusieurs des règles de détermination suivantes : si le nombre de tentatives d'appel pendant la période de détection est supérieur ou non à un seuil établi, si les numéros d'appelés appartiennent ou non au même segment de numéro, si les motifs de coupure d'appel sont ou non une coupure précoce de sonnerie, et si les cellules d'appelant et les zones de localisation d'appelant sont ou non identiques ;
dans lequel la règle d'identification de fraude par message court comprend une ou plusieurs des conditions de détermination suivantes : si le nombre de messages courts envoyés pendant la période de détection est supérieur ou non à un seuil établi, si les numéros de destinataire de message court appartiennent ou non au même segment de numéro, et si les cellules d'expéditeur de message court et les zones de localisation d'expéditeur de message court sont ou non identiques ; et
l'établissement d'une politique de restriction de services correspondant à l'utilisateur frauduleux pour restreindre une utilisation de services par l'utilisateur frauduleux après que l'utilisateur frauduleux a été identifié.

2. Procédé selon la revendication 1,
dans lequel la politique de restriction de services comprend une ou plusieurs des conditions de restriction suivantes : impossibilité pour l'utilisateur d'appeler, fausse facturation de l'utilisateur frauduleux, restriction d'un service de message court de l'utilisateur et impossibilité pour l'utilisateur de mettre à jour une localisation.

3. Dispositif de détection de fraude, **caractérisé en ce qu'**il comprend :
un module d'identification d'utilisateur frauduleux (710) configuré pour analyser des données extraites d'un enregistrement de tentative d'appel ou d'un enregistrement de message court d'appel d'un utilisateur dans une période de détection selon une règle établie d'identification de fraude de manière à identifier un utilisateur frauduleux, l'enregistrement de tentative d'appel désignant un enregistrement généré dans un cas où une durée de sonnerie d'un appel est inférieure à une valeur préétablie et aucun état de téléphonie n'est déclenché,
dans lequel le module d'identification d'utilisateur frauduleux (710) comprend :
un sous-module de collecte de données (711) configuré pour collecter l'enregistrement de tentative d'appel ou l'enregistrement de message court d'appel de l'utilisateur ;
un sous-module de traitement de données (712) configuré pour extraire un paramètre de l'enregistrement pour former des données de détection de l'utilisateur correspondant à l'enregistrement ; et
un sous-module de détection de fraude (713) configuré, lorsque la période de détection établie est atteinte, selon la règle établie d'identification de fraude, pour analyser les données de détection de chaque utilisateur pendant la période de manière à identifier l'utilisateur frauduleux,
dans lequel le paramètre extrait de l'enregistrement de tentative d'appel comprend un ou plusieurs des paramètres suivants : un numéro d'appelant, un numéro d'appelé, une cellule d'appelant, une zone de localisation d'appelant, et un motif de coupure d'appel ;
dans lequel le paramètre extrait de l'enregistrement de message court d'appel comprend un ou plusieurs des paramètres suivants : un numéro d'expéditeur de message court, un numéro de destinataire de message court, une cellule d'expéditeur de message court, et une zone de localisation d'expéditeur de message court ;
dans lequel la règle établie d'identification de fraude comprend une règle d'identification de fraude vocale et une identification de fraude par message court ;
dans lequel la règle d'identification de fraude vocale comprend une ou plusieurs des règles de détermination suivantes : si le nombre de tentatives d'appel pendant la période de détection est supérieur ou non à un seuil établi, si les numéros d'appelés appartiennent ou non au même segment de numéros, si les motifs de coupure d'appel sont ou non une coupure précoce de sonnerie, et si les cellules d'appelant et les zones de localisation d'appelant sont ou non identiques ;
dans lequel la règle d'identification de fraude par message court comprend une ou plusieurs des conditions de détermination suivantes : si le nombre de messages courts envoyés pendant la période de détection est supérieur ou non à un seuil établi, si les numéros de destinataire de message court appartiennent ou non au même segment de numéros, et si les cellules d'expéditeur de message court et les zones de localisation d'expéditeur de message court sont ou non identiques ;
dans lequel le module d'identification d'utilisateur frauduleux (710) est configuré en outre pour établir une politique de restriction de services correspondant à l'utilisateur frauduleux pour restreindre une utilisation de services par l'utilisateur frauduleux après que l'utilisateur frauduleux a été identifié.

4. Système de détection d'un utilisateur frauduleux, comprenant un serveur de centre de commutation mobile MSC (801) et le dispositif de détection de fraude selon la revendication 3 ;
dans lequel le serveur MSC (801) est configuré pour générer un enregistrement de tentative d'appel et un enregistrement de message court d'appel pour un utilisateur et envoyer l'enregistrement de tentative d'appel et l'enregistrement de message court d'appel au dispositif de détection de fraude.

5. Système selon la revendication 4,
dans lequel le dispositif de détection de fraude est configuré en outre pour envoyer un numéro de téléphone de l'utilisateur frauduleux et une politique de restriction de services établie pour l'utilisateur frauduleux au serveur MSC ; et
le serveur MSC (801) est configuré en outre pour ajouter le numéro de téléphone de l'utilisateur frauduleux à une liste noire, et pour restreindre l'utilisation de services par l'utilisateur frauduleux selon la politique de restriction de services correspondant à l'utilisateur frauduleux.

6. Support de stockage lisible par ordinateur, dans lequel sont stockées des instructions exécutables par ordinateur, les instructions exécutables par ordinateur étant configurées pour mettre en oeuvre le procédé selon la revendication 1 ou 2.

7. Programme informatique qui, lorsqu'il est exécuté sur un processeur d'un dispositif, met en oeuvre un procédé selon la revendication 1 ou 2.
